# EUROPÄISCHE PATENTSCHRIFT

(11) **EP 3 974 214 B1**
(45) Veröffentlichungstag und Bekanntmachung des Hinweises auf die Patenterteilung: **11.10.2023**
(21) Anmeldenummer: 21190015.4
(22) Anmeldetag: 06.08.2021
(51) Int. Cl.: B60G 17/0185, G07C 5/08, B60G 17/0195, G01M 17/04

(54) **VERFAHREN UND FAHRZEUG MIT EINER VORRICHTUNG ZUM DETEKTIEREN EINES ZUSTANDES DES FAHRZEUGS**
METHOD AND VEHICLE WITH A DEVICE FOR DETECTING A STATE OF THE VEHICLE
PROCÉDÉ ET VÉHICULE AVEC UN DISPOSITIF POUR DÉTECTION D'UN ÉTAT DU VÉHICULE

(30) Priorität: 23.09.2020 DE 102020211877
(43) Veröffentlichungstag der Anmeldung: 30.03.2022
(73) Patentinhaber: Robert Bosch GmbH, 70442 Stuttgart (DE)
(72) Erfinder: Fassnacht, Jochen, 75365 Calw (DE); Trautmann, Simon, 70599 Stuttgart (DE); Beulich, Klaus, 71263 Weil Der Stadt (DE)

(56) Entgegenhaltungen:
- EP-A1- 2 511 686
- EP-A2- 0 971 217
- EP-A2- 2 520 921
- WO-A1-2019/105532
- US-A1- 2011 130 915

## Beschreibung

### Stand der Technik

Die vorliegende Erfindung betrifft ein Verfahren und ein Fahrzeug mit einer Vorrichtung zum Detektieren eines Zustandes des Fahrzeuges, insbesondere zum Detektieren eines Defekts an dem Fahrzeug.

Bei aktuellen Diagnosekonzepten werden meist Sensorsignale, welche eine Reaktion einer Fahrzeugkomponente auf ein Fahrmanöver oder eine Singularität der Fahrbahn aufzeichnen, ausgewertet und somit auf Defekte des zugehörigen Fahrzeuges geschlossen. Es werden beispielsweise Beschleunigungssignale, Tonsignale oder Körperschallsignale ausgewertet, um auf defekte Lager, Stoßdämpfer oder ähnliches zu schließen.

Zur Diagnose eines Fahrwerks werden dabei typischerweise Anregungen genutzt, die bei einem regulären Betrieb des Fahrzeuges auftreten und zu einem Geräusch oder zu einer Beschleunigung führen und mit einem Sensor aufgezeichnet werden. Falls allerdings lange Zeit keine Anregung stattfindet, da beispielsweise kein ausreichendes Schlagloch durchfahren oder kein ausreichender Brems- oder Beschleunigungsvorgang auftritt, so kann auch lange Zeit keine Diagnose ausgeführt werden. Dies gilt insbesondere für die Diagnose von Fahrwerkskomponenten wie z.B. Radlager, Stoßdämpfer, Federn, Querlenkerlager, Verbundlager oder Mehrlenkerhinterachslager sowie der Reifen.

Aus der DE 10 2015 207 486 A1 ist ein Verfahren bekannt, bei dem durch ein Fahrassistenzsystem ein Testmanöver ausgeführt wird, welches eine Fahrwerksüberprüfung ermöglicht. Ein weiteres Verfahren zur Diagnose eines Fahrwerkzustandes ist aus der DE 10 2012 017 939 A1 bekannt.

Aus der US 2011/130915 A1 ist ein Fahrzeugüberwachungsverfahren und - system bekannt, das bestimmte Fahrzeugparameter überwacht und auswertet, welche durch ein gezieltes Überfahren von bekannten Hindernissen bzw. Unebenheiten auf einer Fahrbahnoberfläche verändert werden.

Die EP 2 511 686 A1 zeigt ein Diagnoseverfahren für Fahrzeugaufhängungen, um frühzeitigen Verschleiß und Fehlverhalten zu erkennen und entsprechende Maßnahmen zu ergreifen.

In der EP 2 520 921 A2 ist ein Verfahren zur Diagnose eines Funktionszustands einer Komponente eines aktiven Fahrwerks eines Kraftwagens offenbart, bei welchem mittels eines Fahrwerksaktors eine vorgegebene Kraft auf das Fahrwerk ausgeübt wird und eine in Abhängigkeit von der Kraft variierende Zustandsgröße der Komponente gemessen wird.

### Offenbarung der Erfindung

Das erfindungsgemäße Verfahren zum Detektieren eines Zustandes eines Fahrzeuges erfasst ein Verursachen einer vordefinierten Verspannung an einem Fahrwerk des Fahrzeuges durch Auslösen eines Bremseingriffs und/oder eines Antriebseingriffs an einem oder mehreren der Räder des Fahrzeuges, um unterschiedliche Beschleunigungen an unterschiedlichen Rädern des Fahrzeuges herbeizuführen, ein Detektieren einer Schwingung und/oder Beschleunigung, die von dem Fahrwerk des Fahrzeuges in Reaktion auf die Verspannung des Fahrwerks ausgeht und ein Erkennen eines Zustandes des Fahrzeuges, basierend auf der detektierten Schwingung und/oder Beschleunigung sowie der vordefinierten Verspannung. Das erfindungsgemäße Fahrzeug mit einer Vorrichtung zum Detektieren eines Zustandes des Fahrzeuges ist dazu eingerichtet, eine Fahrzeugsteuerung dazu anzuregen, durch Auslösen eines Bremseingriffs und/oder eines Antriebseingriffs an einem oder mehreren der Räder des Fahrzeuges eine vordefinierte Verspannung an einem Fahrwerk des Fahrzeuges zu verursachen, um unterschiedliche Beschleunigungen an unterschiedlichen Rädern des Fahrzeuges herbeizuführen, eine Schwingung und/oder Beschleunigung zu detektieren, die von dem Fahrwerk des Fahrzeuges in Reaktion auf die Verspannung des Fahrwerks ausgeht, und einen Zustand des Fahrzeugs, basierend auf der detektierten Schwingung und/oder Beschleunigung sowie der vordefinierten Verspannung zu erkennen.

Bei dem Verursachen einer vordefinierten Verspannung an dem Fahrwerk des Fahrzeuges wird gezielt eine Verspannung des Fahrwerkes herbeigeführt, wobei bestimmte Eigenschaften der Verspannung bekannt sind. Die herbeigeführte Verspannung ist daher eine vordefinierte Verspannung. Auch bei einem regulären Fahrbetrieb eines Fahrzeuges kann es zu Verspannungen innerhalb des Fahrwerks des Fahrzeuges kommen. Dabei ist jedoch nicht zwingend bekannt, zu welcher Verspannung ein bestimmtes Fahrmanöver führt, da Verspannungen des Fahrwerks normalerweise durch eine Fahrzeugsteuerung, beispielsweise durch gezielte Bremseingriffe, vermieden werden, um eine Fahrstabilität des Fahrzeuges zu gewährleisten. Erfindungsgemäß werden bestimmte vordefinierte Verspannungen jedoch gezielt verursacht, was durch Auslösen eines Bremseingriffs und/oder eines Antriebseingriffs an einem oder mehreren der Räder des Fahrzeuges erfolgt. Ein Auslösen eines Bremseingriffs erfolgt dabei insbesondere durch einen Bremseingriff an dem einen oder mehreren der Räder. Der Antriebseingriff erfolgt insbesondere dadurch, dass das eine oder mehrere der Räder gezielt angetrieben wird.

Um die vordefinierte Verspannung herbeizuführen, kann dabei insbesondere ein unterschiedlich starker Bremseingriff an unterschiedlichen Rädern des Fahrzeuges oder ein unterschiedlich starker Antriebsangriff an unterschiedlichen Rädern des Fahrzeuges erfolgen. Auch kann ein Bremseingriff und/oder ein Antriebsangriff an einigen der Räder des Fahrzeuges erfolgen, wobei an den übrigen Rädern des Fahrzeuges kein Bremseingriff und/oder Antriebseingriff erfolgt. Ferner kann dazu ein Bremseingriff an einigen der Räder des Fahrzeuges kombiniert mit einem Antriebseingriff an anderen Rädern des Fahrzeuges ausgelöst werden.

Das Auslösen des Bremseingriffs und/oder des Antriebseingriffs kann dabei ein additiver Eingriff sein. Das bedeutet, dass beispielsweise ein regulärer Bremseingriff zum Verzögern einer Bewegung des Fahrzeuges additiv zu einem Bremseingriff und/oder Antriebseingriff ausgeführt wird, der zu der vordefinierten Verspannung des Fahrwerks führt. Das Auslösen eines Bremseingriffs und/oder eines Antriebseingriffs kann somit auch als ein Verstärken eines Bremseingriffs und/oder eines Antriebseingriffs bzw. ein Abschwächen eines Bremseingriffs und/oder eines Antriebseingriffs verstanden werden.

Durch das Auslösen des Bremseingriffs und/oder des Antriebseingriffs an einem der mehreren der Räder des Fahrzeuges werden unterschiedliche Beschleunigungen an unterschiedlichen Rädern des Fahrzeuges herbeigeführt. Dabei sind die unterschiedlichen Beschleunigungen insbesondere solche Beschleunigungen, welche entlang oder entgegen einer Fahrtrichtung des Fahrzeuges gerichtet sind. Dabei wird insbesondere durch das Auslösen eines Bremseingriffs an einem der Räder eine negative Beschleunigung an dem jeweiligen Rad herbeigeführt und durch einen Antriebsangriff an einem der Räder eine positive Beschleunigung an dem jeweiligen Rad des Fahrzeuges herbeigeführt.

Zusätzlich können die vordefinierten Verspannungen durch ein gezieltes Überfahren einer Unebenheit mit einem oder mehreren der Räder des Fahrzeuges verursacht werden. Ein gezieltes überfahren ist dabei insbesondere ein geplantes und/oder planmäßig herbeigeführtes Überfahren einer Unebenheit. Das gezielte Überfahren ist somit kein zufälliges Überfahren einer Unebenheit sondern wird bevorzugt durch eine gezielte Längs-/Querlenkung des Fahrzeuges herbeigeführt. So erfolgt insbesondere ein Erfassen von Unebenheiten in einer Umgebung des Fahrzeuges und ein Ermitteln einer Trajektorie und/oder Geschwindigkeit mit welcher diese Unebenheit mit einem oder mehreren der Räder überfahren wird.

Eine Unebenheit ist dabei insbesondere eine Straßenschwelle, ein Schlagloch ein Randstein oder ein Testobjekt. Bevorzugt ist eine Position der Unebenheit in einer Karte hinterlegt, damit diese gezielt angefahren werden kann. Alternativ wird die Unebenheit durch eine Umgebungssensorik im Umfeld des Fahrzeuges erkannt und basierend auf einer dabei ermittelten Lage der Unebenheit gegenüber dem Fahrzeug angefahren.

Es ist vorteilhaft, wenn eine Dimension der Unebenheit ermittelt wird, beispielsweise mittels der Umgebungssensorik des Fahrzeuges, und basierend auf der ermittelten Dimension eine Geschwindigkeit und eine Trajektorie ermittelt wird, damit das Überfahren der Unebenheit zu der vordefinierten Verspannung führt.

Die detektierte Schwingung und/oder Beschleunigung ist insbesondere eine Schwingung oder ein Impuls, welcher sich durch das Fahrwerk des Fahrzeuges und bevorzugt auch durch das gesamte Fahrzeug ausbreitet. Die Schwingung ist dabei insbesondere ein Körperschall oder ein Tonsignal. Das Detektieren erfolgt insbesondere mittels eines dafür geeigneten Sensors. Es ergibt sich, dass bei dem Detektieren der Schwingung und/oder Beschleunigung auch solche Schwingungen und/oder Beschleunigungen detektiert werden können, die nicht von dem Fahrwerk des Fahrzeuges in Reaktion auf die Verspannung des Fahrzeuges ausgehen. Daher ist insbesondere eine Filterung der detektierten Schwingung und/oder Beschleunigung vorteilhaft, um die von dem Fahrwerk des Fahrzeuges ausgehenden Schwingungen und/oder Beschleunigungen zu detektieren, die in Reaktion auf die Verspannung des Fahrwerks ausgehen.

Es erfolgt ein Erkennen eines Zustandes, insbesondere eines Defekts, des Fahrzeuges, basierend auf der detektierten Schwingung und/oder Beschleunigung sowie der vordefinierten Verspannung. So wird bei dem Erkennen des Zustandes des Fahrzeuges insbesondere ein Vergleich ausgeführt, wobei eine detektierte Schwingung oder Beschleunigung mit einer vordefinierten Schwingung und/oder Beschleunigung verglichen wird, welche vorliegt, wenn die vordefinierte Verspannung an dem Fahrwerk des Fahrzeuges verursacht wird und das Fahrzeug keinen Defekt aufweist.

Es wird somit durch eine gezielte Anregung des Fahrwerks bzw. der Reifen eine Diagnose unterstützt. Dabei wird das Fahrwerk gezielt verspannt und zumindest einzelne Räder des Fahrzeuges gezielt gebremst oder beschleunigt. Dabei können insbesondere solche Anregungen des Fahrwerks zur Diagnose genutzt werden, welche die Passagiere oder der Fahrer des Fahrzeuges nicht direkt wahrnehmen.

Die Unteransprüche zeigen bevorzugte Weiterbildungen der Erfindung.

Bevorzugt erfolgt bei dem Verursachen der vordefinierten Verspannung eine Auswahl aus einer Anzahl vordefinierter Verspannungen. Dabei ist jede der vordefinierten Verspannungen bevorzugt durch jeweils einen Bremseingriff und/oder einen Antriebseingriff definiert, wobei jedem der Räder des Fahrzeuges zugeordnet ist, wie groß ein Bremseingriff und/oder ein Antriebseingriff sein soll, um die jeweilige vordefinierte Verspannung zu erzeugen. Durch eine Auswahl der jeweiligen vordefinierten Verspannungen kann eine gezielte Diagnose erfolgen, um Defekte oder einen Zustand des Fahrzeuges zu erkennen.

Ferner ist es vorteilhaft, wenn dabei jeder der Anzahl vordefinierter Verspannungen zumindest ein Defekt zugeordnet ist, welcher basierend auf der jeweiligen vordefinierten Verspannung erkannt werden kann. So treten insbesondere bei bestimmten Verspannungen des Fahrwerks Schwingungen und/oder Beschleunigungen auf, die einen bestimmten Defekt andeuten und erkennen lassen. Bevorzugt wird in einer gegebenen Abfolge die Anzahl der vordefinierten Verspannungen in Folge verursacht, um zu erkennen, ob einer der zugeordneten Defekte vorliegt.

Insbesondere wird bei dem Verursachen einer vordefinierten Verspannung an zumindest einem Rad auf einer rechten Seite des Fahrzeuges eine unterschiedliche Beschleunigung gegenüber einem Rad auf einer linken Seite des Fahrzeugs erzeugt, um die vordefinierte Verspannung zu verursachen. So werden beispielsweise auf der rechten Seite des Fahrzeuges eines oder beide Räder des Fahrzeuges gebremst, während auf der linken Seite des Fahrzeuges eines oder beide der Räder weniger stark gebremst werden, gar nicht gebremst werden oder durch einen Antriebseingriff beschleunigt werden. Es wird somit das zumindest eine Rad auf der rechten Seite des Fahrzeuges in eine unterschiedliche Richtung gedrückt, als das Rad auf der linken Seite des Fahrzeuges. Es kommt somit zu der vordefinierten Verspannung des Fahrwerks. Durch die unterschiedliche Beschleunigung eines oder mehrerer rechts gelegener Räder des Fahrzeuges gegenüber einem oder mehrerer links gelegener Räder des Fahrzeuges können insbesondere bei dem Erkennen des Zustandes des Fahrzeugs Defekte unterschieden werden. Es kann erkannt werden, ob ein Defekt auf einer rechten Seite bzw. auf einer linken Seite des Fahrzeuges vorliegt.

Des Weiteren ist es vorteilhaft, wenn bei dem Verursachen der vordefinierten Verspannung an zumindest einem Rad an einer vorderen Achse des Fahrzeugs eine unterschiedliche Beschleunigung gegenüber einem Rad an einer hinteren Achse des Fahrzeuges erzeugt wird, um die vordefinierte Verspannung zu verursachen. Durch die unterschiedliche Beschleunigung der beiden Räder werden das vorne gelegene Rad und das hinten gelegene Rad entweder aufeinander zu beschleunigt oder voneinander weg beschleunigt. Es kommt zu der gewünschten vordefinierten Verspannung des Fahrwerks. Dabei kann bei dem unterschiedlichen Beschleunigen zumindest eines vorne gelegenen Rades des Fahrzeuges gegenüber einem hinteren Rad des Fahrzeuges eine besonders genaue Unterscheidung von Defekten erfolgen, wobei bei dem Erkennen des Zustandes des Fahrzeuges zwischen Defekten an einer vorderen Achse des Fahrzeuges und an einer hinteren Achse des Fahrzeuges unterschieden werden kann.

Auch ist es vorteilhaft, wenn bei dem Verursachen der vordefinierten Verspannung lediglich an einem einzigen Rad des Fahrzeuges ein Bremseingriff und/oder ein Antriebseingriff ausgelöst wird, um die vordefinierte Verspannung zu verursachen. An den übrigen Rädern des Fahrzeuges wird kein Bremseingriff und/oder Antriebseingriff ausgelöst, oder ein bereits vorliegender Bremseingriff oder Antriebseingriff wird unverändert beibehalten. Auf diese Weise kann gezielt eine Aufhängung eines bestimmten Rades geprüft werden und bei dem Erkennen des Zustands des Fahrzeuges ein Defekt an der Aufhängung dieses Rades erkannt werden. Auch ist es vorteilhaft, wenn bei dem Verursachen einer vordefinierten Verspannung an einem Rad des Fahrzeuges ein Bremseingriff ausgelöst wird und zugleich an einem anderen Rad des Fahrzeuges ein Antriebseingriff ausgelöst wird, um die vordefinierte Verspannung zu verursachen. Dabei werden insbesondere Beschleunigungen in unterschiedliche Richtungen ausgelöst, wodurch es zu einer besonders effizienten vordefinierten Verspannung des Fahrwerks kommt. Auf diese Weise wird ein besonders starker Impuls auf das Fahrwerk ausgelöst, wodurch Defekte besonders effizient erkannt werden können, da diese typischerweise zuerst unter starken Belastungen auftreten.

Bevorzugt erfolgt das Erkennen des Zustandes des Fahrzeuges ferner basierend darauf, ob das Fahrzeug sich vorwärts oder rückwärts bewegt. So wird beispielsweise abhängig von einer Bewegung des Fahrzeuges durch einen Bremseingriff eine Beschleunigung in unterschiedliche Richtungen gegenüber dem Fahrzeug an einem Rad verursacht. So wird beispielsweise ein Rad in Richtung eines Fahrzeughecks beschleunigt, wenn das Fahrzeug vorwärts bewegt wird und ein Bremseingriff auf das Rad ausgelöst wird. In entsprechender Weise wird ein Rad in Richtung einer Fahrzeugfront beschleunigt, wenn ein Bremseingriff für das Rad ausgelöst wird und das Fahrzeug zeitgleich rückwärts bewegt wird. Abhängig davon können unterschiedliche Defekte an einer Aufhängung eines Rades detektiert werden.

Ferner ist es vorteilhaft, wenn bei dem Detektieren der Schwingung und/oder Beschleunigung eine akustische Schwingung mittels eines Mikrofons detektiert wird und/oder eine Beschleunigung durch einen ESP-Beschleunigungssensor oder Körperschallsensor detektiert wird. Durch diese Sensoren werden zum einen effizient Impulse erkannt, welche sich in einem Fahrzeug ausbreiten, wodurch ein effizientes Erkennen des Zustandes des Fahrzeuges ermöglicht wird. Ferner sind diese Sensoren vorteilhaft, da diese oftmals ohnehin schon an einem Fahrzeug verbaut sind.

Die erfindungsgemäße Vorrichtung ist dazu eingerichtet, das erfindungsgemäße Verfahren auszuführen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine Darstellung eines Fahrzeugs, welches eine erfindungsgemäße Vorrichtung zum Detektieren eines Zustandes eines Fahrzeugs aufweist,
- Figur 2: eine Darstellung eines beispielhaften Verursachens einer ersten vordefinierten Verspannung an einem Fahrwerk eines Fahrzeuges,
- Figur 3: eine Darstellung eines beispielhaften Verursachens einer zweiten vordefinierten Verspannung an einem Fahrwerk eines Fahrzeugs,
- Figur 4: eine beispielhafte Darstellung eines beispielhaften Verursachens einer dritten vordefinierten Verspannung an einem Fahrwerk eines Fahrzeugs, und
- Figur 5: eine Darstellung eines beispielhaften Verursachens einer vierten vordefinierten Verspannung an einem Fahrwerk eines Fahrzeugs.

### Ausführungsformen der Erfindung

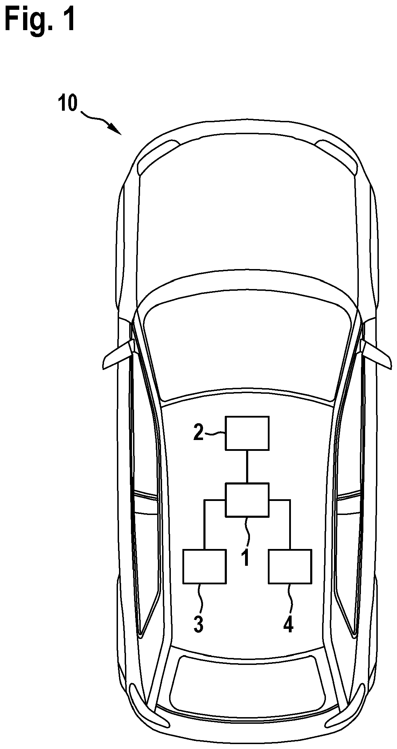

Figur 1 zeigt ein Fahrzeug 10, welches eine Vorrichtung 1 zum Detektieren eines Zustandes des Fahrzeuges 10 umfasst. Die Vorrichtung 1 ist dabei als eine digitale Recheneinheit ausgeführt, welche mit einer Fahrzeugsteuerung 2 gekoppelt ist, welche dazu eingerichtet ist, ein Antriebssystem und ein Bremssystem des Fahrzeuges 10 gezielt anzusteuern. Ferner ist die Vorrichtung 1 mit einem ersten Sensor 3 und einem zweiten Sensor 4 gekoppelt. Der erste Sensor 3 ist beispielsweise ein Mikrofon und ist dazu eingerichtet, akustische Schwingungen zu erfassen, die sich in dem Fahrzeug 10 ausbreiten. Optional ist der erste Sensor 3 auch dazu geeignet, solche Schwingungen zu erfassen, welche nicht im hörbaren Bereich gelegen sind oder sich als Körperschwingungen in dem Fahrzeug 1 ausbreiten. Der zweite Sensor 4 ist ein Sensor, durch welchen Beschleunigungen und somit Impulse erfasst werden können, die sich in dem Fahrzeug 10 ausbreiten. Dabei ist der zweite Sensor 4 beispielsweise ein ESP-Beschleunigungssensor. Die von dem ersten Sensor 3 und dem zweiten Sensor 4 erfassten Sensordaten werden der Vorrichtung 1 bereitgestellt.

Die Vorrichtung 1 ist dazu eingerichtet, die Fahrzeugsteuerung 2 dazu anzuregen, durch Auslösen eines Bremseingriffs und/oder eines Antriebseingriffs an einem oder mehreren der Räder 11, 12, 13, 14 des Fahrzeuges 10 eine vordefinierte Verspannung an einem Fahrwerk des Fahrzeuges 10 zu verursachen, um unterschiedliche Beschleunigungen an unterschiedlichen Rädern 11, 12, 13, 14 des Fahrzeuges 10 herbeizuführen.

Eine Beschleunigung, welche ein Rad des Fahrzeuges 10 in Richtung der Fahrzeugfront des Fahrzeuges 10 drückt, wird im Folgenden als positive Beschleunigung bezeichnet. Eine Beschleunigung, welches ein Rad in Richtung eines Hecks des Fahrzeuges 10 drückt, wird im Folgenden als negative Beschleunigung betrachtet.

Wurde die vordefinierte Verspannung an dem Fahrwerk des Fahrzeuges 10 verursacht, so erfolgt ein Detektieren einer Schwingung und/oder Beschleunigung, die von dem Fahrwerk des Fahrzeuges 10 in Reaktion auf die Verspannung des Fahrwerks ausgeht. Dies erfolgt durch den ersten Sensor 3 und/oder über den zweiten Sensor 4. Die detektierte Beschleunigung ist dabei nicht zwingend identisch zu der Beschleunigung, die an den jeweiligen Rädern des Fahrzeuges 10 herbeigeführt wurde, um die vordefinierte Verspannung zu verursachen. Vielmehr ist die detektierte Beschleunigung bevorzugt ein Beschleunigungsimpuls, der sich durch das gesamte Fahrzeug, ausgehend von dem Fahrwerk, ausbreitet.

Wurde eine der vordefinierten Verspannung zugehörige Schwingung und/oder Beschleunigung detektiert, so erfolgt in einem nächsten Schritt ein Erkennen eines Zustandes des Fahrzeuges 10, basierend auf der detektierten Schwingung und/oder Beschleunigung sowie der vordefinierten Verspannung. So ist in der Vorrichtung 1 insbesondere eine zu erwartende Schwingung und/oder Beschleunigung hinterlegt, die der vordefinierten Verspannung zugehörig ist. Die detektierte Schwingung und/oder Beschleunigung wird mit der zu erwartenden Schwingung und/oder Beschleunigung verglichen. Sind diese Schwingungen und/oder Beschleunigungen weitgehend identisch oder weichen zumindest um weniger als ein vordefiniertes Maß voneinander ab, so kann erkannt werden, dass der Zustand des Fahrzeuges als nicht defekt eingeschätzt werden kann. Weicht die detektierte Schwingung und/oder Beschleunigung von der hinterlegten zur erwartenden Schwingung und/oder Beschleunigung ab, so kann ein Defekt des Fahrzeuges 10 erkannt werden.

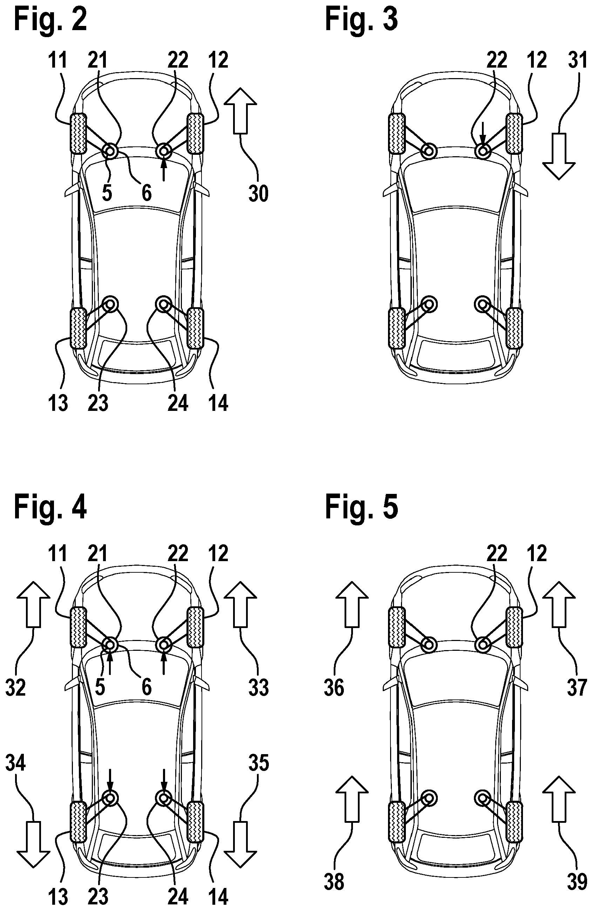

Mit den Figuren 2 bis 5 sind unterschiedliche beispielhafte vordefinierte Verspannungen beschrieben, welche verursacht werden können, um die zum Erkennen des Zustandes des Fahrzeuges benötigte vordefinierte Verspannung an dem Fahrzeug des Fahrzeuges zu verursachen.

In jeder der Figuren 2 bis 5 ist das Fahrzeug 10 dargestellt. Dabei weist das Fahrzeug 10 ein erstes Rad 11 auf, welches über ein erstes Lager 21 an einer Karosserie des Fahrzeuges 10 befestigt ist. Ferner weist das Fahrzeug 10 ein zweites Rad 12 auf, welches über ein zweites Lager 22 an der Karosserie des Fahrzeuges 10 befestigt ist. Ferner weist das Fahrzeug 10 ein drittes Rad 13 auf, welches über ein drittes Lager 23 an der Karosserie des Fahrzeuges 10 befestigt ist. Ferner weist das Fahrzeug 10 ein viertes Rad 14 auf, welches über ein viertes Lager 24 an der Karosserie des Fahrzeuges 10 befestigt ist. Das erste Rad 11 ist ein vorderes linkes Rad des Fahrzeuges 10. Das zweite Rad 12 ist ein vorderes rechtes Rad des Fahrzeuges 10. Das dritte Rad 13 ist ein hinteres linkes Rad des Fahrzeuges 10. Das vierte Rad 14 ist ein hinteres rechtes Rad des Fahrzeuges 10.

Jedes der Lager 21 bis 24 weist einen inneren Befestigungspunkt 5 auf, an dem das jeweils zugehörige Rad befestigt ist. Der innere Befestigungspunkt 5 ist über eine den inneren Befestigungspunkt 5 umlaufende Gummilagerung 6 mit der Karosserie des Fahrzeuges 10 verbunden. Kommt es zu einem Defekt an der Gummilagerung 6, so kann es zu metallischen Kontakten innerhalb des jeweiligen Lagers 21 bis 24 kommen, wobei beispielsweise der innere Befestigungspunkt 5 an eine äußere Halterung der Gummilagerung 6 schlägt.

Neben diesen Gummilagern kann mittels des hier vorgeschlagenen Konzeptes auch andere ungewünschte Lose im Fahrwerk, sicher erkannt und einzelnen Rädern zugeordnet werden. Diese Lose kann durch Brüche oder Verschleiß des Fahrwerks entstehen.

Figur 2 zeigt, wie eine erste vordefinierte Verspannung an dem Fahrwerk des Fahrzeuges 10 verursacht wird. Dabei wird lediglich an einem einzigen Rad, hier dem zweiten Rad 12, des Fahrzeuges 10 ein Antriebsangriff ausgelöst, um die vordefinierte Verspannung zu verursachen. An den übrigen Rädern des Fahrzeuges, also an dem ersten Rad 11, dem dritten Rad 13 und dem vierten Rad 14, wird weder ein Bremseingriff noch ein Antriebseingriff ausgelöst. Das zweite Rad 12 kann den Antriebseingriff erfahren, indem dieses beispielsweise über eine Kupplung mit dem Motor des Fahrzeuges 10 gekoppelt wird, wobei über dieselbe oder weitere Kupplungen die übrigen Räder des Fahrzeuges 10 von dem Motor getrennt werden. Alternativ können auch ein oder mehrerer Differentiale mit gezielten Bremseingriffen an den entgegengesetzten Rädern zur Verteilung des Antriebsmoments auf einzelne Räder eingesetzt werden. Eine Kraftübertragung des Motors des Fahrzeuges 10 erfolgt somit ausschließlich auf das zweite Rad 12. Ist das Fahrzeug 10 ein Elektrofahrzeug, so kann das zweite Rad 12 beispielsweise auch über einen dem zweiten Rad 12 zugehörigen Elektromotor angetrieben werden, um den Antriebsangriff auszuführen.

Durch den Antriebseingriff auf das zweite Rad 12 wird eine Beschleunigung, hier eine positive Beschleunigung, auf das zweite Rad 12 ausgeübt, welche durch den ersten Pfeil 30 in Figur 2 dargestellt ist. Dadurch wird das zweite Rad 12 in Richtung einer Fahrzeugfront des Fahrzeuges 10 beschleunigt und eine entsprechende Kraft auf das zweite Lager 22 ausgeübt. Liegt in dem zweiten Lager 22 ein Defekt vor, so wird es zu einem metallischen Kontakt innerhalb des Lagers 22 kommen, der zu einer Ausbreitung einer Schwingung und/oder Beschleunigung innerhalb des Fahrzeuges 10 führt. Mit anderen Worten, das Aufeinanderstoßen der metallischen Komponenten ist hörbar und kann durch den ersten Sensor 3 als akustischer Schall erfasst werden oder das Aufeinanderstoßen der metallischen Komponenten führt zu einem Impuls, der sich durch das Fahrzeug 10 ausbreitet, und kann durch den zweiten Sensor 4 als Beschleunigung des zweiten Sensors 4 erfasst werden. Da der Vorrichtung 1 bekannt ist, welche vordefinierte Verspannung an dem Fahrwerk des Fahrzeuges 10 verursacht wurde, kann der durch den Defekt verursachte Schall oder Impuls, also die detektierte Schwingung und/oder Beschleunigung, einen Defekt an dem zweiten Rad 12 zugeordnet werden. Bei dem Erkennen eines Zustandes des Fahrzeuges kann somit erkannt werden, dass ein Defekt des zweiten Lagers 22 vorliegt.

Figur 3 zeigt, wie eine zweite vordefinierte Verspannung an dem Fahrwerk des Fahrzeuges 10 verursacht wird. Die zweite vordefinierte Verspannung wird in ähnlicher Weise verursacht, wie auch die in Figur 2 beschriebene erste Verspannung. Jedoch wird das zweite Rad 12 in eine umgekehrte Richtung beschleunigt, wird also in Richtung eines Hecks des Fahrzeuges 10 beschleunigt. Dies kann insbesondere auch durch einen entsprechenden Antriebseingriff an dem zweiten Rad 12 erreicht werden. In entsprechender Weise kann dies auch dadurch erreicht werden, dass ein Bremseingriff an dem zweiten Rad 12 ausgeführt wird, während das Fahrzeug 10 sich vorwärts bewegt.

Es ergibt sich, dass sowohl durch einen Antriebseingriff als auch durch einen Bremseingriff ein Rad des Fahrzeuges 10 entweder in Richtung einer Front des Fahrzeuges 10 oder in Richtung eines Hecks des Fahrzeuges 10 beschleunigt werden kann, wobei bei einem Bremseingriff eine Bewegung des Fahrzeuges 10 benötigt wird. Daher erfolgt das Erkennen des Zustandes des Fahrzeuges bevorzugt ferner basierend darauf, ob das Fahrzeug 10 sich vorwärts oder rückwärts bewegt.

Bei der in Figur 3 gezeigten vordefinierten zweiten Verspannung wird das zweite Rad 12 gegenüber der in Figur 2 dargestellten vordefinierten ersten Verspannung in eine umgekehrte Richtung beschleunigt, was durch den zweiten Pfeil 31 dargestellt ist. Somit wird bei dem Verursachen der zweiten vordefinierten Verspannung an dem Fahrwerk des Fahrzeuges 10 eine umgekehrte Kraft auf das zweite Lager 22 ausgeübt, als bei dem Verursachen der ersten vordefinierten Verspannung. Es kann somit bei dem Erkennen des Zustandes des Fahrzeuges erkannt werden, ob eine andere Seite des zweiten Lagers 22 beschädigt ist, als bei der in Figur 2 gezeigten ersten vordefinierten Verspannung.

Bei der ersten vordefinierten Verspannung und der zweiten vordefinierten Verspannung erfolgt lediglich an einem einzigen Rad des Fahrzeuges 10 ein Bremseingriff oder alternativ ein Antriebseingriff. Dabei wird an dem zumindest einen Rad, hier dem zweiten Rad 12, auf einer rechten Seite des Fahrzeuges 10 eine unterschiedliche Beschleunigung gegenüber einem Rad auf einer linken Seite des Fahrzeuges 10, beispielsweise dem ersten Rad 11, erzeugt, da auf der linken Seite des Fahrzeuges 10 an dem ersten Rad 11 keine Beschleunigung erzeugt wird und auf der rechten Seite des Fahrzeuges an dem zweiten Rad 12 eine positive oder eine negative Beschleunigung erzeugt wird.

Figur 4 zeigt, wie eine dritte vordefinierte Verspannung an dem Fahrwerk des Fahrzeuges 10 verursacht wird. Dabei wird an dem ersten Rad 11 und dem zweiten Rad 12 eine positive Beschleunigung herbeigeführt, indem sowohl auf das erste Rad 11 als auch das zweite Rad 12 ein Antriebseingriff ausgeübt wird. Dies führt zu einer positiven Beschleunigung des ersten Rades 11 und des zweiten Rades 12, was durch den dritten Pfeil 32 und den vierten Pfeil 33 dargestellt ist. Zugleich wird an dem dritten Rad 13 und dem vierten Rad 14 eine negative Beschleunigung herbeigeführt, indem ein Bremseingriff an diesen Rädern ausgelöst wird. Das Fahrzeug 10 befindet sich bei dem Verursachen der dritten vordefinierten Verspannung in einer Vorwärtsbewegung. Dies führt zu einer negativen Beschleunigung des dritten Rades 13 und des vierten Rades 14, was durch den fünften Pfeil 34 und den sechsten Pfeil 35 dargestellt ist.

Es wird somit an einem Rad des Fahrzeuges 10, hier dem dritten Rad 13 oder dem vierten Rad 14, ein Bremseingriff ausgelöst und zugleich an einem anderen Rad, hier dem ersten Rad 11 oder dem zweiten Rad 12, ein Antriebseingriff ausgelöst, um die vordefinierte dritte Verspannung zu verursachen. Da an den vorderen Rädern, also an dem ersten Rad 11 und dem zweiten Rad 12 des Fahrzeuges, eine positive Beschleunigung anliegt, und an den hinteren Rädern, also dem dritten Rad 13 und dem vierten Rad 14, eine negative Beschleunigung anliegt, liegt zumindest an einem Rad an der vorderen Achse des Fahrzeuges 10 eine unterschiedliche Beschleunigung gegenüber einem Rad an einer hinteren Achse des Fahrzeuges 10 vor.

Bei der dritten vordefinierten Verspannung werden alle der Lager 21 bis 24 des Fahrzeuges 10 gleichmäßig stark, aber je nach Achse in unterschiedlicher Richtung belastet. Es kann somit durch ein einziges auslösen einer Verspannung erkannt werde, ob an irgendeinem der Lager 21 bis 24 ein Defekt vorliegt.

Figur 5 zeigt, wie eine vierte vordefinierte Verspannung an dem Fahrwerk des Fahrzeuges 10 verursacht wird. Dabei wird an dem ersten Rad 11 und dem zweiten Rad 12 eine erste Beschleunigung durch einen Antriebseingriff oder einen Bremseingriff verursacht, wobei diese erste Beschleunigung im Betrag größer ist als eine zweite Beschleunigung, welche durch einen Bremseingriff oder einen Antriebseingriff an der Hinterachse des Fahrzeuges 10 an dem dritten Rad 13 und dem vierten Rad 14 erzeugt wird. So werden zwar alle Räder 11 bis 14 des Fahrzeuges 10 in die gleiche Richtung beschleunigt, die vorderen Räder werden jedoch mit einer größeren Beschleunigung als die hinteren Räder des Fahrzeuges 10 beaufschlagt. Die an den vorderen Rädern anliegende Beschleunigung ist durch den siebten Pfeil 36 und den achten Pfeil 37 dargestellt. Die an den hinteren Rädern anliegende Beschleunigung ist durch den neunten Pfeil 38 und den zehnten Pfeil 39 dargestellt. Die Länge der Pfeile stellt dabei einen Betrag der zugehörigen Beschleunigung dar.

Die in den Figuren 2 bis 5 gezeigten vordefinierten Verspannungen sind lediglich beispielhaft gewählt. So ergibt sich insbesondere für den Fachmann, dass die in den Figuren 2 und 3 gezeigten beispielhaften vordefinierten Verspannungen lediglich für das zweite Rad 12 gezeigt sind, jedoch für jedes der Räder 11 bis 14 des Fahrzeuges 10 angewandt werden können. Ferner ergibt sich, dass durch ein entsprechendes Verwenden von Antriebseingriffen und Bremseingriffen weitere vordefinierte Verspannungen gewählt werden können, wobei frei definiert werden kann, welches der Räder 11 bis 14 mit einem Bremseingriff und/oder einem Antriebseingriff beaufschlagt wird.

Bevorzugt erfolgt bei dem Verursachen der vordefinierten Verspannung eine Auswahl aus einer Anzahl vordefinierter Verspannungen. Dabei ist jeder der Anzahl der vordefinierten Verspannungen zumindest ein Defekt zu geordnet, welcher basierend auf der jeweiligen vordefinierten Verspannung erkannt werden kann. So ist beispielsweise jede der in den Figuren 2 bis 5 gezeigten vordefinierten Verspannungen in der Anzahl der vordefinierten Verspannungen hinterlegt. Dabei ist der ersten vordefinierten Verspannung ein Defekt an einem vorderen rechten Rad, also an dem zweiten Rad 12, des Fahrzeuges 10 zugeordnet, da dieser mittels der ersten vordefinierten Verspannung besonders effizient erkannt werden kann. Dabei ist der ersten vordefinierten Verspannung insbesondere ein Lagerschaden an einer Vorderseite des zweiten Lagers 22 zugeordnet. In entsprechender Weise ist der zweiten vordefinierten Verspannung ein Lagerschaden an dem zweiten Lager 22 zugeordnet, wobei insbesondere ein Lagerschaden an einer Hinterseite des zweiten Lagers 22 zugeordnet ist. Wird die jeweilige vordefinierte Verspannung verursacht, so kann bei dem Erkennen des Zustandes des Fahrzeuges der entsprechende Defekt erkannt werden. Mit anderen Worten bedeutet dies beispielhaft, dass bei der ersten vordefinierten Verspannung das zweite Rad 12 in Richtung der Fahrzeugfront beschleunigt wird und erkannt werden kann, ob in dem zweiten Lager 22 Metall auf Metall trifft, da das Lager abgenutzt ist. Ist dies der Fall, so wird durch den Schaden eine Schwingung bzw. Beschleunigung verursacht, die durch den ersten Sensor 3 oder den zweiten Sensor 4 detektiert wird. Dadurch, dass die erste vordefinierte Verspannung verursacht wurde und nicht die zweite vordefinierte Verspannung verursacht wurde, kann die Vorrichtung 1 erkennen, dass ein Defekt an einer Vorderseite des zweiten Lagers 22 vorliegt, wenn eine durch das Aufeinandertreffen metallischer Teile verursachte Schwingung und/oder Beschleunigung detektiert wird. Das Erkennen des Zustandes des Fahrzeuges erfolgt somit sowohl basierend auf der detektierten Schwingung und/oder Beschleunigung, als auch basierend auf der vordefinierten Verspannung, da die vordefinierte Spannung ein Indikator dafür ist, wo der Defekt vorliegt.

Basierend auf der in Figur 4 gezeigten dritten vordefinierten Verspannung kann besonders effizient erkannt werden, ob eines der Lager 21 bis 24 defekt ist. So ist es beispielsweise vorteilhaft, wenn zunächst basierend auf der dritten vordefinierten Verspannung erkannt wird, ob irgendeines der Lager 21 bis 24 defekt ist und abhängig davon basierend auf der ersten vordefinierten Verspannung oder der zweiten vordefinierten Verspannung geprüft wird, ob das zweite Lager 22 defekt ist.

Basierend auf der vierten vordefinierten Verspannung kann effizient erkannt werden, ob ein defektes Lager an einer Vorderachse oder an einer Hinterachse des Fahrzeuges 10 vorliegt.

Die vordefinierte Verspannung kann durch Auslösen des Bremseingriffs unterhalb des Antriebseingriffs während einer Fahrt des Fahrzeuges 10 verursacht werden. Insbesondere die durch Auslösen eines Antriebseingriffs verursachten vordefinierten Verspannung können jedoch auch bei einem Stillstand des Fahrzeugs 10 verursacht werden. So können beispielsweise bei der in Figur 2 gezeigten ersten vordefinierten Verspannung das erste Rad 11, das dritte Rad 13 und das vierte Rad 14 durch einen Bremseingriff blockiert sein und lediglich das zweite Rad 12 kann durch Auslösen eines Antriebseingriffs beschleunigt werden. Dies ist besonders vorteilhaft, da auf diese Weise keine Bewegung des Fahrzeuges erfolgt, und somit bei dem Verursachen der Verspannung eine Fahrstabilität nicht berücksichtigt werden muss.

Es erfolgt somit ein gezielter Einsatz von Fahrwerksanregungen zur Diagnose derselben. Die Anregungen ist dabei unter anderem ein Verspannen von Vorderzu Hinterachse, z.B. indem eine Achse angetrieben wird und eine Achse abgebremst wird. Auch ist es vorteilhaft nur gezielt einzelne Räder abzubremsen, während andere angetrieben werden.

Einer der Vorteile der Erfindung ist es, dass ohne Zusatzhardwareaufwand nur durch eine koordinierte Ansteuerung von schon bestehenden elektronisch angesteuerten Komponenten die Diagnose des Fahrwerks deutlich verbessert oder erst ermöglichen wird. Gerade im Fahrwerk vorhandene Komponenten, zum Beispiel ausgeschlagene Gummilager an der Hinterachse oder an irgendwelchen Lenkern, resultiert in deutlichen Bewegungen der Räder in Relation zur Karosserie, wenn man entsprechend des vermuteten Defekts das Fahrwerk richtig durch eine Verspannung anregt.

Falls die Gummilager der Hinterachse ausgeschlagen sind und man bremst die Hinterachse bei angetriebener Vorderachse, so kann oftmals die komplette Hinterachse ca. 2 cm vor- und zurückbewegt werden, bis eben bei den defekten Gummilagern Stahl auf Stahl trifft. Dieses Auftreffen von Stahl auf Stahl kann man eindeutig akustisch hören oder mit einem Mikrophon messen bzw. über z.B. die ESP-Beschleunigungssensoren erfassen. Auch falls die Lager noch nicht so stark verschlissen sind, dass Stahl auf Stahl trifft, so kann man dies zwar nicht am Geräusch aber trotzdem an der Beschleunigung erkennen, wenn der Übergang Lose zu Restgummi stattfindet. Falls also bei so einer beschriebenen Anregung ein derartiger Beschleunigungsverlauf oder ein passendes Geräusch gemessen wird, so kann man auf einen Defekt der Aufhängung schließen. Falls die Raddrehzahlen ausgewertet werden bzw. die Raddrehzahlen in Korrelation zu E-Maschinenlage ausgewertet werden, so kann die zusätzliche Lose bzw. die zusätzliche Bewegung des Rades auch erkannt und einem Lager zugeordnet werden. Falls nur einzelne Räder angebremst werden, so kann man auf einzelne Radaufhängungen bzw. die passenden Lager hierzu schließen. Durch das ESP ist das Anbremsen einzelner Räder möglich.

Die Erfindung hat also zwei große Vorteile, man kann gezielt Anregungen zur Diagnose erzeugen und somit vermeiden, dass Komponenten über längere Zeit komplett gar nicht diagnostiziert werden, weil die passende Anregung aufgrund der Fahrstrecke oder des Fahrprofils nicht anliegt, und man kann für jede Diagnose gezielt die richtige Anregung erzeugen und weiß auch noch die exakte Größe, Art und den Zeitpunkt der Anregung, was die Diagnose deutlich vereinfacht. Die Diagnose kann zentral auf einem beliebigen Steuergerät ausgeführt werden, falls dieses die nötigen Anregungssollwerte vorgegeben bekommt und die nötigen Sensorsignale, hier hauptsächlich Geräusche und Chassisbeschleunigungen, sowie Raddrehzahlen und E-Maschinendrehzahlen, erfassen kann. Hierzu ist eine geeignete Buskommunikation vorteilhaft, um die nötigen Anregungsfunktionen auf den entsprechenden Komponentensteuergeräten für Bremse, Lenkung und elektrischem Antrieb auszulösen. Die nötigen Signale der Aktuator-Steuergeräte stehen oftmals zur Verfügung. Sie können mit fahrzeugeinheitlichem Zeitstempel versehen und auf dem Bus bereitgestellt werden.

Bei klassischen Elektrofahrzeugen sind gezielte Anregungen des Fahrwerks beim normalen Fahren oder im Stillstand möglich. Hierzu können beispielsweise einzelne Räder leicht angebremst werden, so dass eine horizontale Lose beispielsweise in Hinterachs- oder Vorderachslagern angeregt und diagnostiziert werden können. Um die Gummilager einer Verbundlenkerhinterachse zu diagnostizieren kann diese während der Fahrt leicht angebremst und dann über den e-Antrieb wieder leicht beschleunigt werden. Falls also Lose in den Lagern vorhanden ist, so wird die Achse sich bei dieser Anregung relativ zum Fahrzeug bewegen. Die Bewegung kann aus der Korrelation von Vorderachsdrehzahl und Hinterachsdrehzahl diagnostiziert werden. Das Überwinden der Lose müsste als kleiner Ruck oder Geräusch auf an das Chassis oder die Karosserie montierten Beschleunigungssensoren ebenfalls sichtbar sein. Falls man nun die Sensorsignale in Korrelation zur Anregung auswertet, so müsste eine gute Diagnose möglich sein. Für die Vorderachse, bzw. die Lenkerlager der Vorderachse ist eine ähnliche Diagnose möglich. Die genaue Anregung ist aber immer von der Antriebstopologie abhängig. Eine nicht angetriebene Achse kann eben nicht so einfach während der Fahrt verschoben werden. Eine derartige Diagnose ist aber im Stand möglich. Hierzu wird die zu diagnostizierende Achse festgebremst und die komplette Karosserie leicht bewegt. Hierbei ist aber zu beachten, dass keine als ungewollte Beschleunigung bzw. Bewegung geltenden Zustände auftreten, was die mögliche Bewegung sehr stark limitiert. Abhilfe kann hierbei ein gezieltes Anbremsen von Rädern oder Achsen beim Rangieren bzw. Losfahren sein, um dann eben ausgeschlagene Gummilager anhand der hierbei auftretenden Lose und dem anschließenden Ruck beim Überwinden derselben zu diagnostizieren.

Die Erfindung wurde zuvor anhand einer Diagnose der Lager 21 bis 24 beschrieben. Die Anregung durch Verspannungen des Fahrwerks zur Diagnose kann jedoch auch zur Diagnose anderer Komponenten genutzt werden. So können insbesondere folgende Komponenten im Fahrzeug erfindungsgemäß geprüft und diagnostiziert werden: Domlager, Fahrwerksfeder, Stoßdämpfer, Querlenkerlagerung an Vorderachse, Verbundlenker- oder Mehrlenkerhinterachslager, Reifen, Achsschenkellager, Achswelle, Differential.

Fakultativ wird die vordefinierten Verspannung an dem Fahrwerk des Fahrzeuges 10 zusätzlich durch gezieltes Überfahren einer Unebenheit mit einem oder mehreren der Räder 11, 12, 13, 14 des Fahrzeuges 10 verursacht. So wird insbesondere eine Lage und eine Dimension von Unebenheiten in einem Umfeld des Fahrzeuges 10 mittels einer Umgebungssensorik des Fahrzeuges 10, beispielsweise mittels einer Kamera, ermittelt. Befindet sich keine geeignete Unebenheit in dem Umfeld des Fahrzeuges, so kann das Fahrzeug optional mittels einer Karte zu einer geeigneten Unebenheit geführt werde, bis diese durch die Umgebungssensorik des Fahrzeuges 10 erfasst werden kann.

Basierend auf der Lage und der Dimension der Unebenheit wird ermittelt, mit welcher Geschwindigkeit und mit welchem oder welchen der Räder 11, 12, 13, 14 des Fahrzeuges 10 die Unebenheit überfahren wird, um die vordefinierte Verspannung zu verursachen. Das Überfahren der Unebenheit wird durch eine entsprechende Längs-Querlenkung des Fahrzeuges 10 verursacht, wobei ein Fahrer des Fahrzeuges 10 entweder entsprechend instruiert wird oder eine autonome Bewegung des Fahrzeuges 10 ausgeführt wird.

Da ein Überfahren einer Unebenheit bei einer Vorwärtsbewegung des Fahrzeuges 10 zu einem ähnlichen Effekt führt wie ein Bremseingriff an dem Rad, welches die Unebenheit überfahrt, können unter anderem die zuvor beschriebenen Techniken zum Verursachen der vordefinierten Verspannung durch Auslösen eines Bremseingriffs angewendet werden.

So kann beispielsweise das mit Figur 2 beschriebene Verspannen des Fahrwerks auch dadurch verursacht werden, dass das Fahrzeug in einer Rückwärtsbewegung mit dem zweiten Rad 12 über eine Unebenheit, wie z.B. eine Straßenschwelle, ein Schlagloch, ein Randstein oder ein Testobjekt fährt. Entsprechend kann das mit Figur 3 beschriebene Verspannen des Fahrwerks dadurch verursacht werden, dass das Fahrzeug 10 in einer Vorwärtsbewegung mit dem zweiten Rad 12 über eine Unebenheit, wie z.B. eine Straßenschwelle, ein Schlagloch ein Randstein oder ein Testobjekt fährt. Die jeweils anderen der Räder fahren dabei nicht über die Unebenheit.

Auch eine Kombination aller zuvor beschriebenen Techniken zum Verursachen der vordefinierten Verspannung an dem Fahrwerk des Fahrzeuges 10 ist vorteilhaft. So kann beispielsweise das mit Figur 4 beschriebene Verspannen des Fahrwerks zusätzlich dadurch verursacht werden, dass das Fahrzeug in einer Vorwärtsbewegung mit dem dritten Rad 13 und dem vierten Rad 14 gleichzeitig über eine Unebenheit fährt und das erste Rad 11 und das zweite Rad 12 zugleich durch einen Antriebseingriff beschleunigt werden. Ferner kann beispielsweise das mit Figur 5 beschriebene Verspannen des Fahrwerks zusätzlich dadurch verursacht werden, dass das Fahrzeug in einer Rückwärtsbewegung mit dem dritten Rad 13 und dem vierten Rad 14 gleichzeitig über eine Unebenheit fährt und das erste Rad 11 und das zweite Rad 12 zugleich durch einen Bremseingriff gebremst werden.

Nebst obenstehender Offenbarung wird explizit auf die Offenbarung der Figuren 1 bis 5 verwiesen.

## Patentansprüche

1. Verfahren (100) zum Detektieren eines Zustandes eines Fahrzeuges (10), umfassend:
- Verursachen (101) einer vordefinierten Verspannung an einem Fahrwerk des Fahrzeuges (10) durch Auslösen eines Bremseingriffs und/oder eines Antriebseingriffs an einem oder mehreren der Räder (11, 12, 13, 14) des Fahrzeuges (10), um unterschiedliche Beschleunigungen an unterschiedlichen Rädern (11, 12, 13, 14) des Fahrzeuges (10) herbeizuführen;
- Detektieren (102) einer Schwingung und/oder Beschleunigung, die von dem Fahrwerk des Fahrzeuges in Reaktion auf die Verspannung des Fahrwerks ausgeht; und
- Erkennen (103) eines Zustandes des Fahrzeuges basierend auf der detektierten Schwingung und/oder Beschleunigung sowie der vordefinierten Verspannung.

2. Verfahren gemäß Anspruch 1, **dadurch gekennzeichnet, dass** bei dem Verursachen (101) der vordefinierten Verspannung eine Auswahl aus einer Anzahl vordefinierter Verspannungen erfolgt.

3. Verfahren gemäß Anspruch 2, **dadurch gekennzeichnet, dass** jeder der Anzahl vordefinierter Verspannungen zumindest ein Defekt zugeordnet ist, welcher basierend auf der jeweiligen vordefinierten Verspannung erkannt werden kann.

4. Verfahren gemäß einem der vordefinierten Ansprüche, **dadurch gekennzeichnet, dass** an zumindest einem Rad (12, 14) auf einer rechten Seite des Fahrzeuges (10) eine unterschiedliche Beschleunigung gegenüber einem Rad (11, 13) auf einer linken Seite des Fahrzeuges (10) erzeugt wird, um die vordefinierte Verspannung zu verursachen.

5. Verfahren gemäß einem der vordefinierten Ansprüche, **dadurch gekennzeichnet, dass** an zumindest einem Rad (11, 12) an einer vorderen Achse des Fahrzeuges (10) eine unterschiedliche Beschleunigung gegenüber einem Rad (13, 14) an einer hinteren Achse des Fahrzeuges (10) erzeugt wird, um die vordefinierte Verspannung zu verursachen.

6. Verfahren gemäß einem der vordefinierten Ansprüche, **dadurch gekennzeichnet, dass** lediglich an einem einzigen Rad (12) des Fahrzeuges (10) ein Bremseingriff und/oder ein Antriebseingriff ausgelöst wird, um die vordefinierte Verspannung zu verursachen.

7. Verfahren gemäß einem der vordefinierten Ansprüche, **dadurch gekennzeichnet, dass** an einem Rad (14) des Fahrzeuges (10) ein Bremseingriff ausgelöst wird und zugleich an einem anderen Rad (12) des Fahrzeuges (10) ein Antriebseingriff ausgelöst wird, um die vordefinierte Verspannung zu verursachen.

8. Verfahren gemäß einem der vordefinierten Ansprüche, **dadurch gekennzeichnet, dass** das Erkennen des Zustandes des Fahrzeuges (10) ferner basierend darauf erfolgt, ob das Fahrzeug (10) sich vorwärts oder rückwärts bewegt.

9. Verfahren gemäß einem der vordefinierten Ansprüche, **dadurch gekennzeichnet, dass** bei dem Detektieren (102) der Schwingung und/oder Beschleunigung, eine akustische Schwingung mittels eines Mikrofons (3) detektiert wird und/oder eine Beschleunigung durch einen Beschleunigungssensor (4) detektiert wird.

10. Fahrzeug mit einer Vorrichtung (1), zum Detektieren eines Zustandes des Fahrzeuges (10), wobei die Vorrichtung (1) dazu eingerichtet ist,
- eine Fahrzeugsteuerung (2) dazu anzuregen, durch Auslösen eines Bremseingriffs und/oder eines Antriebseingriffs an einem oder mehreren der Räder (11, 12, 13, 14) des Fahrzeuges (10) eine vordefinierte Verspannung an einem Fahrwerk des Fahrzeuges (10) zu verursachen, um unterschiedliche Beschleunigungen an unterschiedlichen Rädern (11, 12, 13, 14) des Fahrzeuges (10) herbeizuführen;
- eine Schwingung und/oder Beschleunigung zu detektieren, die von dem Fahrwerk des Fahrzeuges (10) in Reaktion auf die Verspannung des Fahrwerks ausgeht; und
- einen Zustand des Fahrzeuges (10) basierend auf der detektierten Schwingung und/oder Beschleunigung sowie der vordefinierten Verspannung zu erkennen.

## Claims

1. Method (100) for detecting a state of a vehicle (10), comprising:
- causing (101) a predefined bracing action at a chassis of the vehicle (10) by triggering a braking intervention and/or a driving intervention at one or more of the wheels (11, 12, 13, 14) of the vehicle (10) in order to bring about different accelerations at different wheels (11, 12, 13, 14) of the vehicle (10) ;
- detecting (102) a vibration and/or acceleration which emanates from the chassis of the vehicle in response to the bracing action of the chassis; and
- identifying (103) a state of the vehicle on the basis of the detected vibration and/or acceleration and also the predefined bracing.

2. Method according to Claim 1, **characterized in that**, when the predefined bracing action is caused (101), a selection is made from a number of predefined bracing actions.

3. Method according to Claim 2, **characterized in that** each of the number of predefined bracing actions is assigned at least one defect which can be identified on the basis of the respective predefined bracing action.

4. Method according to one of the predefined claims, **characterized in that** at at least one wheel (12, 14) on a right side of the vehicle (10) a different acceleration in relation to a wheel (11, 13) on a left side of the vehicle (10) is generated in order to cause the predefined bracing action.

5. Method according to one of the predefined claims, **characterized in that** at at least one wheel (11, 12) on a front axle of the vehicle (10) a different acceleration in relation to a wheel (13, 14) on a rear axle of the vehicle (10) is generated in order to cause the predefined bracing action.

6. Method according to one of the predefined claims, **characterized in that** a braking intervention and/or driving intervention is triggered merely at a single wheel (12) of the vehicle (10) in order to cause the predefined bracing action.

7. Method according to one of the predefined claims, **characterized in that** a braking intervention is triggered at one wheel (14) of the vehicle (10) and at the same time a driving intervention is triggered at another wheel (12) of the vehicle (10) in order to cause the predefined bracing action.

8. Method according to one of the predefined claims, **characterized in that** the state of the vehicle (10) is furthermore identified on the basis of whether the vehicle (10) is moving forwards or backwards.

9. Method according to one of the predefined claims, **characterized in that**, when the vibration and/or acceleration is detected (102), an acoustic vibration is detected by means of a microphone (3) and/or an acceleration is detected by an acceleration sensor (4).

10. Vehicle with a device (1) for detecting a state of the vehicle (10), wherein the device (1) is designed
- to excite a vehicle controller (2) to cause a predefined bracing action at a chassis of the vehicle (10), by triggering a braking intervention and/or a driving intervention at one or more of the wheels (11, 12, 13, 14) of the vehicle (10), in order to bring about different accelerations at different wheels (11, 12, 13, 14) of the vehicle (10),
- to detect a vibration and/or an acceleration which emanates from the chassis of the vehicle (10) in response to the bracing action of the chassis; and
- to identify a state of the vehicle (10) on the basis of the detected vibration and/or acceleration and also the predefined bracing action.

## Revendications

1. Procédé (100) de détection d'un état d'un véhicule (10), comprenant :
- la provocation (101) d'une tension prédéfinie sur un châssis du véhicule (10) par déclenchement d'une action de freinage et/ou d'une action d'entraînement sur une ou plusieurs des roues (11, 12, 13, 14) du véhicule (10), afin d'aboutir à des accélérations différentes sur différentes roues (11, 12, 13, 14) du véhicule (10) ;
- la détection (102) d'une vibration et/ou d'une accélération produite par le châssis du véhicule en réponse à la tension du châssis ; et
- l'identification (103) d'un état du véhicule sur la base de la vibration et/ou de l'accélération détectée, ainsi que de la tension prédéfinie.

2. Procédé selon la revendication 1, **caractérisé en ce que**, lors de la provocation (101) de la tension prédéfinie, une sélection est effectuée parmi un nombre de tensions prédéfinies.

3. Procédé selon la revendication 2, **caractérisé en ce qu'**à chacune du nombre de tensions prédéfinies est associé au moins un défaut qui peut être identifié sur la base de la tension prédéfinie respective.

4. Procédé selon l'une quelconque des revendications prédéfinies, **caractérisé en ce qu'**une accélération différente est générée sur au moins une roue (12, 14) sur un côté droit du véhicule (10) par rapport à une roue (11, 13) sur un côté gauche du véhicule (10) afin de provoquer la tension prédéfinie.

5. Procédé selon l'une quelconque des revendications précédentes, **caractérisé en ce qu'**une accélération différente est générée sur au moins une roue (11, 12) sur un essieu avant du véhicule (10) par rapport à une roue (13, 14) sur un essieu arrière du véhicule (10) afin de provoquer la tension prédéfinie.

6. Procédé selon l'une quelconque des revendications précédentes, **caractérisée en ce qu'**une action de freinage et/ou une action d'entraînement est déclenchée uniquement sur une seule roue (12) du véhicule (10) afin de provoquer la tension prédéfinie.

7. Procédé selon l'une quelconque des revendications précédentes, **caractérisé en ce qu'**une action de freinage est déclenchée sur une roue (14) du véhicule (10) et une action d'entraînement est déclenchée simultanément sur une autre roue (12) du véhicule (10) afin de provoquer la tension prédéfinie.

8. Procédé selon l'une quelconque des revendications précédentes, **caractérisé en ce que** l'identification de l'état du véhicule (10) a en outre lieu sur la base de si le véhicule (10) se déplace vers l'avant ou vers l'arrière.

9. Procédé selon l'une quelconque des revendications précédentes, **caractérisé en ce que**, lors de la détection (102) de la vibration et/ou de l'accélération, une vibration acoustique est détectée au moyen d'un microphone (3) et/ou une accélération est détectée par un capteur d'accélération (4).

10. Véhicule avec un dispositif (1) pour détecter un état du véhicule (10), dans lequel le dispositif (1) est adapté pour
- inviter une commande de véhicule (2) à provoquer, par déclenchement d'une action de freinage et/ou d'une action d'entraînement sur une ou plusieurs des roues (11, 12, 13, 14) du véhicule (10), une tension prédéfinie sur un châssis du véhicule (10), afin d'aboutir à des accélérations différentes sur différentes roues (11, 12, 13, 14) du véhicule (10) ;
- détecter une vibration et/ou une accélération produite par le châssis du véhicule (10) en réponse à la tension du châssis ; et
- identifier un état du véhicule (10) sur la base de la vibration et/ou de l'accélération détectée, ainsi que de la tension prédéfinie.
